# EUROPEAN PATENT APPLICATION

(11) **EP 3 647 716 A1**
(43) Date of publication of application: **06.05.2020**
(21) Application number: 18823109.6
(22) Date of filing: 30.05.2018
(51) Int. Cl.: G01B 11/245, G01C 3/06, H04N 5/225, H04N 17/00

(54) **IMAGING DEVICE**

(30) Priority: 26.06.2017 JP 2017124572
(71) Applicant: Hitachi Automotive Systems, Ltd., Hitachinaka-shi, Ibaraki 312-8503 (JP)
(72) Inventor: TADA Naoya, Hitachinaka-shi Ibaraki 312-8503 (JP); MATONO Haruki, Hitachinaka-shi Ibaraki 312-8503 (JP); MUTOU Yoshiyuki, Hitachinaka-shi Ibaraki 312-8503 (JP)
(74) Representative: Strehl Schübel-Hopf & Partner
(86) International application number: PCT/JP2018/020665
(87) International publication number: WO 2019/003771

(57) **Abstract**

This imaging device makes it possible to carry out stereo camera optical axis calibration in more environments. The imaging device comprises: a pair of imaging units consisting of a first imaging unit 11 and second imaging unit 12; an image storage unit 13 for storing a first image imaged by the first imaging unit 11 and a second image imaged by the second imaging unit 12 at the same time as the first image; a moved image generation unit 14 for generating a third image by moving the pixels of the first image by a predetermined amount in the vertical direction; a parallax image generation unit 15 for generating a first parallax image from the first image and second image and generating a second parallax image from the second image and third image; and an optical axis deviation detection unit 16 for detecting the amount of vertical optical axis deviation between the first imaging unit 11 and second imaging unit 12 on the basis of the first parallax image and second parallax image.

## Description

### Technical Field

The present invention relates to an imaging device.

### Background Art

In recent years, a driving support system using an image obtained by an in-vehicle camera device has attracted attention as one of the technologies contributing to safe driving and automatic driving. This system uses, for example, a technology that determines a deviation in the horizontal direction (parallax) with respect to a target object appearing in two images captured by an in-vehicle camera device having a pair of imaging devices (stereo cameras), and that calculates the distance to the target object using the principle of triangulation on the basis of the determined parallax.

In the in-vehicle camera device used for such a technology, for example, the accuracy of the position of the optical axis of the lens would greatly affect the accuracy in the distance to be calculated and in the driving support system using the lens, and thus, adjustment of lens optical axis (calibration) is very important. Under this circumstance, various techniques related to the calibration of the optical axis in a stereo camera have been proposed. For example, PTL 1 (JP 2013-113600 A) discloses a stereo three-dimensional measurement apparatus that acquires a plurality of images of a camera calibration board by using a plurality of cameras that captures a measurement target object to acquire images, and performs camera calibration using the plurality of images to calculate calibration parameters, and then uses the calculated calibration parameters to perform correction of errors including at least one of distortion, inclination, or deviation included in the plurality of images of the measurement target objects.

### Citation List

### Patent Literature

PTL 1: JP 2013-113600 A

### Summary of Invention

### Technical Problem

However, in the above-described known technology, the calibration board needs to be disposed at a predetermined position at implementation of calibration. Therefore, it has been difficult to perform calibration of the optical axis of the stereo camera during travel of the vehicle considered to have an influence of deterioration due to aging of hardware of the camera and a temperature change, which has resulted in a problem of significantly limited environment in which the calibration can be performed.

The present invention has been made in view of the above, and aims to provide an imaging device capable of relaxing the limitation of the environment in which the calibration of the optical axis of the stereo camera can be performed.

### Solution to Problem

In order to achieve the above object, the present invention includes: a pair of imaging units including a first imaging unit and a second imaging unit; an image storage unit for storing a first image captured by the first imaging unit and a second image captured by the second imaging unit at the same time as the first image; a moved image generation unit for generating a third image by moving pixels of the first image by a predetermined amount in a vertical direction; a parallax image generation unit for generating a first parallax image from the first image and second image and generating a second parallax image from the second image and third image; and an optical axis deviation detection unit for detecting an amount of vertical optical axis deviation between the first imaging unit and the second imaging unit on the basis of the first parallax image and the second parallax image.

### Advantageous Effects of Invention

According to the present invention, it is possible to relax the limitation of the environment in which the calibration of the optical axis of the stereo camera can be performed, enabling implementation of calibration at any timing.

### Brief Description of Drawings

[FIG. 1] FIG. 1 is a functional block diagram schematically illustrating an entire configuration of an imaging device according to the present embodiment.
[FIG. 2] FIG. 2 is a diagram illustrating an example of a relationship between the amount of shift in the vertical direction in third images from the first image and the number of parallaxes of parallax images generated from each of the third images and a second image.
[FIG. 3] FIG. 3 is a diagram illustrating an example of a relationship, in an image having difficulty in obtaining parallax, between the amount of shift in the vertical direction in the third image from the first image and the number of parallaxes of parallax images generated from each of the third images and the second image.
[FIG. 4] FIG. 4 is a diagram illustrating an example of a relationship, in an image that is likely to have an error in parallax calculation, between the amount of shift in the vertical direction in the third image from the first image and the number of parallaxes of parallax images generated from each of the third images and the second image.
[FIG. 5] FIG. 5 is a flowchart illustrating optical axis deviation detection processing.

### Description of Embodiments

Hereinafter, embodiments of the present invention will be described with reference to the drawings.

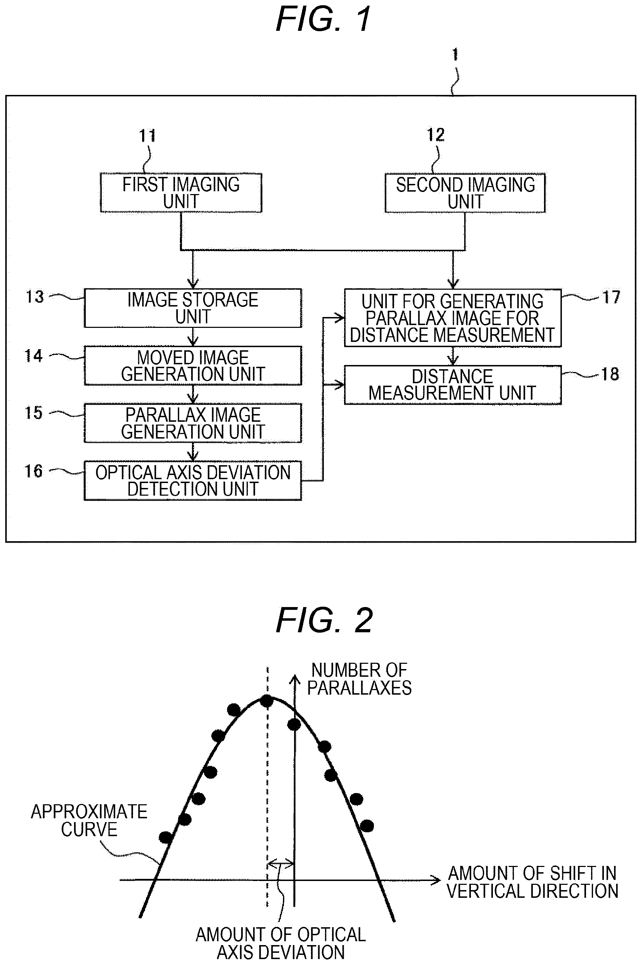

FIG. 1 is a functional block diagram schematically illustrating an entire configuration of an imaging device according to the present embodiment.

In FIG. 1, an imaging device 1 generally includes a pair of imaging units 11 and 12, an image storage unit 13, a moved image generation unit 14, a parallax image generation unit 15, an optical axis deviation detection unit 16, and a unit for generating parallax image for distance measurement 17, and a distance measurement unit 18.

The pair of imaging units 11 and 12 (first imaging unit 11 and second imaging unit 12) constitute a stereo camera for capturing in the direction of an imaging target in the imaging device 1 to obtain an image, and is arranged at the same height on the left and right of the imaging device 1 such that the optical axis and imaging direction are oriented in the same direction. Each of the first imaging unit 11 and the second imaging unit 12 continuously captures images and outputs the captured images.

The image storage unit 13 stores a pair of images (a first image and a second image) captured at the same time to be used for calculation of optical axis deviation among the images captured and continuously output by the first imaging unit 11 and the second imaging unit 12.

The moved image generation unit 14 generates a plurality of images (third images) by vertically moving the pixels, by a different predetermined amount for each of pixels, in one of the pair of images (first image and second image) captured by the imaging units 11 and 12 and stored in the image storage unit 13. Here, an exemplary case of generating the plurality of third images from the first image captured by the first imaging unit 11 will be described.

The parallax image generation unit 15 generates a parallax image (first parallax image) from the first image and the second image stored in the image storage unit 13 and also generates a plurality of parallax images (second parallax images) from the other one (that is, the second image here) of the pair of images (first and second images) and from the plurality of third images.

The optical axis deviation detection unit 16 detects the amount of optical axis deviation in the vertical direction between the first imaging unit 11 and the second imaging unit 12 on the basis of the first parallax image and the second parallax image. The amount of optical axis deviation detected by the optical axis deviation detection unit 16 is transmitted to the unit for generating parallax image for distance measurement 17 and to the distance measurement unit 18.

The unit for generating parallax image for distance measurement 17 generates a parallax image for distance measurement from the two images captured by the pair of imaging units, that is, the first imaging unit 11 and the second imaging unit 12. Note that generation of the parallax image by the unit for generating parallax image for distance measurement 17 may use the amount of optical axis deviation detected by the optical axis deviation detection unit 16.

The distance measurement unit 18 measures a distance to a target object (for example, a pedestrian or another vehicle) appearing in the two images captured by the pair of imaging units (first imaging unit 11 and the second imaging unit 12) on the basis of the parallax image generated by the unit for generating parallax image for distance measurement 17. Among various methods that can be considered as a measurement method, for example, the horizontal deviation (parallax) with respect to the target object appearing in two images captured by the pair of imaging units (first imaging unit 11 and second imaging unit 12) is determined by the parallax image, and the distance to the target object is calculated by the principle of triangulation on the basis of the determined parallax. Note that, when the distance measurement unit 18 measures the distance, the measurement result is corrected using the optical axis deviation amount detected by the optical axis deviation detection unit 16.

Here, the detection principle of the optical axis deviation amount will be described.

For example, in two images captured by the pair of imaging units, the number of parallaxes of the parallax image obtained from the two images increases or decreases depending on the amount of vertical optical axis deviation in the pair of imaging units.

That is, the number of parallaxes of the parallax image has a tendency to be a maximum value when there is no vertical optical axis deviation in the pair of imaging units (in a case where deviation is minimum), and decreases with an increase in the amount of optical axis deviation. The reason is that a search is performed with a matching direction of parallax image generation in the horizontal direction, and therefore, occurrence of vertical optical axis deviation in the pair of imaging units equals to degradation of the matching evaluation value. Accordingly, based on such a finding, the present inventors move one (first image, for example) of the two images (first and second images) captured by the pair of imaging units (first and second imaging units 11 and 12) in the vertical direction (that is, generates the third image), and thereby changing the apparent amount of optical axis deviation in the optical axis of the pair of imaging units (the first imaging unit 11 and the second imaging unit 12), and then, calculates the amount of optical axis deviation in the pair of imaging units (first and second imaging units 11 and 12) on the basis of the state of change in the number of parallaxes of the parallax images obtained from the third images created by moving the first image in the vertical direction, and from the second image.

FIG. 2 is a diagram illustrating an example of the relationship between the amounts of shift in the third image in the vertical direction from the first image and the number of parallaxes of the parallax images between each of the third images and the second image, in which the vertical axis represents the number of parallaxes of the parallax image, and the horizontal axis represents the amounts of shift in the vertical direction.

As illustrated in FIG. 2, the number of parallaxes of the parallax image changes in accordance with the change in the amount of shift in the vertical direction in the third image from the first image, that is, the change in the apparent amount of optical axis deviation in the first imaging unit 11 with respect to the second imaging unit 12. Here, since it is known that the number of parallaxes of the parallax image is the maximum value when there is no amount (minimum) of vertical optical axis deviation, it is possible to obtain the amount of vertical optical axis deviation between the first imaging unit 11 and the second imaging unit 12 from the difference between the origin position in the horizontal axis direction (that is, the amount of shift in the vertical direction in the third image), (that is, in a case where the third image is the same as the first image) and the value of the amount of shift at which the number of parallaxes is the maximum value. Note that FIG. 2 indicates a case of calculating an approximate curve of the number of parallaxes (here, an upward-convex quadratic curve) using a method such as the least squares method, for example, so as to calculate the amount of deviation in the optical axis using this approximate curve.

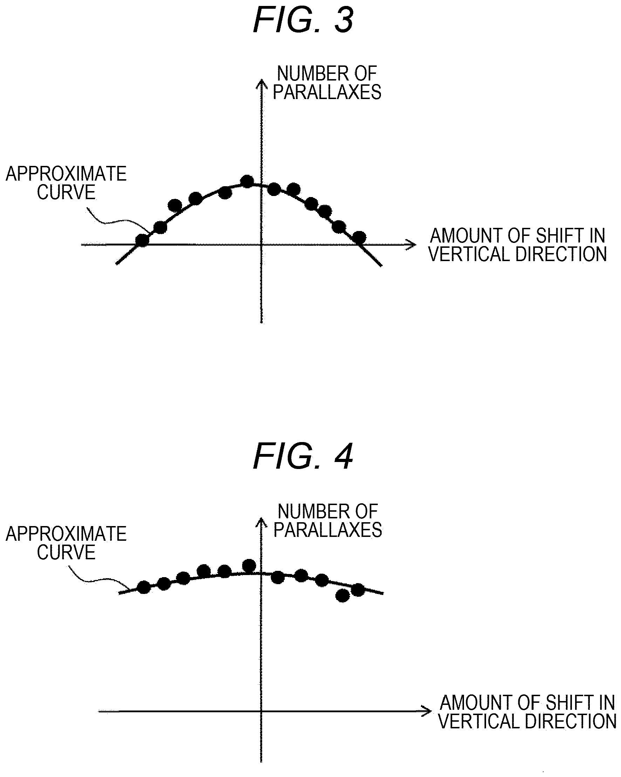

Note that there is a need, in the calculation of the amount of optical axis deviation, to avoid use of an image having difficulty in obtaining parallax or an image that is likely to have an error in parallax calculation, as the image captured by the first imaging unit 11 and the second imaging unit 12, in order to detect correct amount of optical axis deviation. That is, it is preferable to use, in the calculation of the amount of optical axis deviation, an image having the distribution of the number of parallaxes close to normal distribution and having large number of parallaxes, namely, an image in which the usefulness of the distribution of the number of parallaxes satisfies a criterion. Here, an example of an image having difficulty in obtaining parallax is an image illustrating the distribution of the number of parallaxes as illustrated in FIG. 3 and includes an image captured on a wall with few feature points or in a dark environment in a garage or the like. Meanwhile, an example of an image that is likely to have an error in parallax calculation is an image indicating the distribution of the number of parallaxes as illustrated in FIG. 4 and includes a captured image having many vertical patterns. In such an image, even when the pixels of the image are shifted in the vertical direction, the difference in the image (in particular, the difference in the vertical direction) is not observed before and after the shifting, and therefore leads to reduction in the change in the number of parallaxes due to the change in the amount of shift.

Next, optical axis deviation detection processing for detecting the amount of optical axis deviation between the first imaging unit 11 and the second imaging unit 12 will be described.

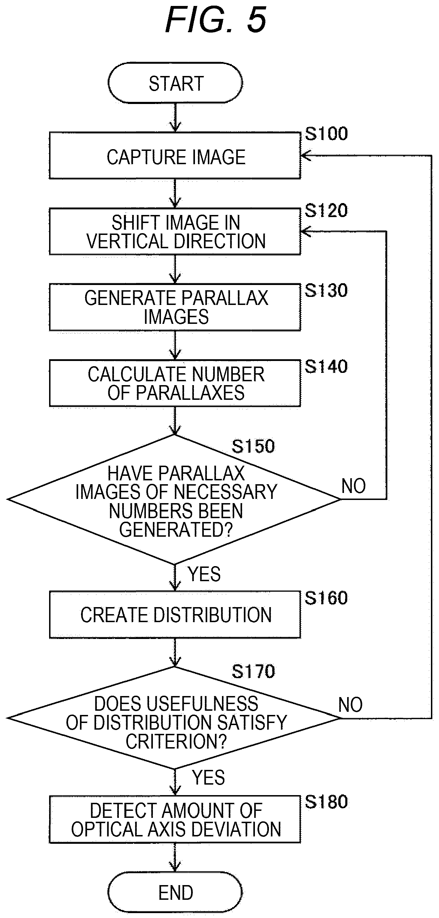

FIG. 5 is a flowchart illustrating optical axis deviation detection processing.

In FIG. 5, the first imaging unit 11 and the second imaging unit 12 perform imaging, and the image storage unit 13 stores a pair of images (first image and second image) captured at the same time (step S100).

Subsequently, the moved image generation unit 14 generates (step S120) an image (third image) by vertically moving the pixels, by a predetermined amount, in one of the pair of images (first image and second image). Here, a case of generating the third image from the first image captured by the first imaging unit 11 will be described as an example.

Subsequently, the parallax image generation unit 15 generates a parallax image (first parallax image) from the first image and the second image stored in the image storage unit 13 and also generates a parallax image (second parallax image) from the other one (that is, the second image here) of the pair of images (first and second images) and from the third image (step S130). Note that calculation of the parallax value in the generation of the parallax image uses template matching.

Subsequently, the optical axis deviation detection unit 16 calculates the number of parallaxes between the second image and each of the third images (step S140). Although the calculation of the number of parallaxes between the second image and the third image may use the entire image, here, it is assumed to calculate the number of parallaxes with higher reliability. The parallax with higher reliability means, for example, the parallax of a feature point having a high edge.

Here, it is determined whether the number of parallax images necessary for detecting the amount of optical axis deviation between the first imaging unit 11 and the second imaging unit 12 has been generated (step S150). Although various types of criteria can be conceived for determination of the number of parallax images necessary for detecting the amount of optical axis deviation, and now, for example, the number of parallax images in which an approximate curve obtained from the distribution of the number of parallaxes created in step S160 described below can achieve sufficient accuracy is to be empirically acquired to be set as a criterion.

In a case where the determination result in step S150 is NO, that is, where a sufficient number of parallax images have not been generated, the processing in steps S120 to S140 is repeated until the determination result is YES. With this processing, the moved image generation unit 14 generates a plurality of images (third images) by vertically moving the pixels, by a different predetermined amount for each of pixels, of one of the pair of images (first and second images), the parallax image generation unit 15 generates a parallax image (first parallax image) from the first image and the second image stored in the image storage unit 13 and also generates a plurality of parallax images (second parallax images) from the other one (that is, the second image here) of the pair of images (first and second images) and from the plurality of third images, and the optical axis deviation detection unit 16 calculates the number of parallaxes between the second image and the plurality of third images (steps S120 to S150) .

In a case where the determination result in step S150 is YES, the distribution of the number of parallaxes with respect to the amount of shift in the vertical direction in the third image is created (step S160).

Subsequently, it is determined whether the usefulness of the distribution created in step S160 satisfies a criterion (that is, whether this is an image in which the distribution of the number of parallaxes is close to normal distribution and having large number of parallaxes) (step S170).

In a case where the determination result in step S170 is NO, the processing in steps S100 to S160 is repeated until an image in which the usefulness of the distribution satisfies the criterion is obtained.

In a case where the determination result in step S170 is YES, the amount of vertical optical axis deviation between the first imaging unit 11 and the second imaging unit 12 is detected (step S180) from the distribution of the number of parallaxes obtained in step S160, the processing is finished.

Effects of the present embodiment having the above configuration will be described.

In the conventional technology that acquires a plurality of images of a camera calibration board by using a plurality of cameras that captures a measurement target object to acquire images and that performs camera calibration using the plurality of images to calculate calibration parameters, it is necessary to place the calibration board in a predetermined position.

Therefore, it has been difficult to perform calibration of the optical axis of the stereo camera during travel of the vehicle considered to have an influence of deterioration due to aging of hardware of the camera and a temperature change, which has resulted in a problem of significantly limited environment in which the calibration can be performed.

In contrast, in the present embodiment, the imaging device includes: the pair of imaging units including the first imaging unit 11 and second imaging unit 12; the image storage unit 13 for storing a first image captured by the first imaging unit 11 and a second image captured by the second imaging unit 12 at the same time as the first image; the moved image generation unit 14 for generating a third image by moving the pixels of the first image by a predetermined amount in the vertical direction; and a parallax image generation unit 15 for generating a first parallax image from the first image and the second image and generating a second parallax image from the second image and third image, and detects the amount of vertical optical axis deviation in the optical axis between the first imaging unit 11 and second imaging unit 12 on the basis of the first parallax image and second parallax image. Accordingly, it is possible to relax the limitation of the environment in which the calibration of the optical axis of the stereo camera can be performed, enabling implementation of calibration at any timing.

### <Supplementary Note>

The present invention is not limited to the above-described individual exemplary embodiments, but may include various types of modification. For example, the above-described embodiments give detailed explanation just to allow the present invention to be clearly understood. Therefore, the present invention is not limited to the case having all of components in the configuration.

Moreover, the above configurations, functions, or the like, may be implemented by designing partial or entire portions with an integrated circuit, for example. Moreover, each of the above-described configurations, functions, or the like, may be implemented with software by a processor by interpreting and executing a program designed to realize individual functions.

### Reference Signs List

1 imaging device
3 stereo
11 first imaging unit
12 second imaging unit
13 image storage unit
14 moved image generation unit
15 parallax image generation unit
16 optical axis deviation detection unit
17 unit for generating parallax image for distance measurement
18 distance measurement unit

## Claims

1. An imaging device comprising:
a pair of imaging units including a first imaging unit and a second imaging unit;
an image storage unit for storing a first image captured by the first imaging unit and a second image captured by the second imaging unit at a same time as the first image;
a moved image generation unit for generating a third image by moving pixels of the first image by a predetermined amount in a vertical direction;
a parallax image generation unit for generating a first parallax image from the first image and the second image and generating a second parallax image from the second image and the third image; and
an optical axis deviation detection unit for detecting an amount of vertical optical axis deviation between the first imaging unit and the second imaging unit on a basis of the first parallax image and the second parallax image.

2. The imaging device according to claim 1,
wherein the moved image generation unit generates a plurality of the third images obtained by vertically moving the pixels, by a different amount for each of the pixels, in the first image,
the parallax image generation unit generates a plurality of the second parallax images from the second image and each of the plurality of third images, and
the optical axis deviation detection unit detects the amount of vertical optical axis deviation between the first imaging unit and the second imaging unit on a basis of the first parallax image and the plurality of second parallax images.

3. The imaging device according to claim 2,
wherein the optical axis deviation detection unit detects the optical axis deviation on a basis of distribution of an effective parallax in the first parallax image and distribution of an effective parallax of each of the plurality of second parallax images.

4. The imaging device according to claim 2,
wherein the optical axis deviation detection unit detects the amount of vertical optical axis deviation between the first imaging unit and the second imaging unit in a case where each of an effective parallax in the first parallax image and a maximum effective parallax of the plurality of second parallax images is greater than a predetermined threshold.

5. The imaging device according to claim 4,
wherein in a case where the effective parallax is below a threshold capable of detecting the optical axis deviation, the first image and the second image are changed to newly generate the first parallax image and the second parallax image to detect optical axis deviation.

6. The imaging device according to any one of claims 1 to 5, comprising:
a unit for generating parallax image for distance measurement that generates a parallax image for distance measurement from two images captured by a pair of imaging units including the first imaging unit and the second imaging unit; and
a distance measurement unit that measures a distance to a target object appearing in the two images captured by the pair of imaging units on a basis of the parallax image generated by the unit for generating parallax image for distance measurement,
wherein at least one of the unit for generating parallax image for distance measurement or the distance measurement unit uses the amount of optical axis deviation detected by the optical axis deviation detection unit.
